# EUROPEAN PATENT APPLICATION

(11) **EP 4 282 626 A1**
(43) Date of publication of application: **29.11.2023**
(21) Application number: 21937961.7
(22) Date of filing: 05.11.2021
(51) Int. Cl.: B29C 65/12

(54) **WELDING ROD FOR FIBER-REINFORCED PLASTIC AND WELDING METHOD USING WELDING ROD FOR FIBER-REINFORCED PLASTIC**

(30) Priority: 19.04.2021 JP 2021070277
(71) Applicant: Kawamoto Kasei Co., Ltd., Wakayama-shi, Wakayama 640-8481 (JP)
(72) Inventor: KAWAMOTO, Atsunari, Wakayama-shi Wakayama 640-8481 (JP)
(74) Representative: Forresters IP LLP
(86) International application number: PCT/JP2021/040718
(87) International publication number: WO 2022/224471

(57) **Abstract**

To provide a welding rod for fiber reinforced plastic and a welding method using the welding rod for fiber reinforced plastic. A welding rod for thermoplastic fiber reinforced plastic is provided that is to be filled in a welding joint between thermoplastic fiber reinforced plastic members and to be melted by a heating means of hot air or hot plate member. The welding rod includes fiber and thermoplastic resin mixed together with the fiber. The mixture of the fiber and the thermoplastic resin forms a rod shape. The content of the fiber is from 1 weight% to 35 weight% when the mixture is 100 weight%. The welding method uses the welding rod for fiber reinforced plastic.

## Description

### [Technical Field]

The present invention relates to a welding rod for fiber reinforced plastic to be used to weld a fiber reinforced plastic member with another fiber reinforced plastic member. Both of the fiber reinforced plastic members contain an identical fiber selected from carbon fiber, glass fiber, boron fiber, aramid fiber, polyethylene fiber, modified polyphenylene ether fiber, cellulose nanofiber, or the like. The present invention also relates to a welding method using the welding rod for fiber reinforced plastic.

### [Background Art]

A method for joining plastics of natural resin or synthetic resin prepared by injection molding or machining and containing fiber generally includes a mechanical method using such as tightening, an adhesion method using rubber-type adhesive, and a solvent-welding method using ultrasonic waves, friction, etc. The solvent-welding method includes a type that uses a wave motion such as ultrasonic waves, high frequencies, or lasers as a heat source, a type that uses friction as a heat source, and a type that uses external heating of hot air or a hot plate as a heat source.

Generally, in welding between plastics of natural or synthetic resin, a welding rod containing a composition identical to the plastics is used. The welding rod is moved while applying sufficient pressing force with its lower end on a mating surface of a joint portion of the plastics, with application of hot air as a heat source, thereby filling melted welding rod in the joint surface for welding.

On the other hand, fixing of fiber reinforced plastic members including carbon fiber, glass fiber, boron fiber, aramid fiber, polyethylene fiber, modified polyphenylene ether fiber, cellulose nanofiber, and the like is performed by an adhesion method, tightening, etc., and it has not been performed by welding in the actual field.

Patent Literature 1 discloses a laser welding method for fiber reinforced composite as welding of carbon fiber reinforced plastic wherein a solid-state laser with a wavelength of 532 nm to 1,080 nm is used to fill filler metal in a mating portion of a welding joint portion between carbon fiber reinforced plastics (CFRPs) or between carbon fiber reinforced plastic (CFRP) and metal, and laser beams are applied to the filler metal to melt the filler metal for laser welding. In the filler metal, reinforcing material containing one or more selected from the group of reinforced carbon fiber, reinforced glass and whisker is contained in thermoplastic resin, or thermosetting resin, or a mixture of the thermoplastic resin and thermosetting resin. The reinforcing material has less than 80 weight% with respect to 100 weight% of the filler metal.

Patent Literature 2 discloses a seam welding method wherein two polyamide plastics are welded using a primer, in which the primer contains at least one polymer synthesized from at least one maleic anhydride or maleic anhydride derivative.

Patent Literature 3 discloses a method for welding fiber reinforced plastic wherein resins in the welding portions of the fiber reinforced plastics are melted and removed to expose each reinforcing fiber to fill another reinforcing fiber in the space of the exposed fibers. Then or after the fibers are welded each other, melted resin is filled in the space and solidified to fix the fiber reinforced plastics.

Patent Literature 4 discloses a method for welding resin, glass fiber reinforced plastic (GFRP), carbon fiber reinforced plastic (CFRP) or carbon material. In this method, a first welding material is fed from a welding material feeding pipe provided to a nozzle portion while gas is fed from a gas feeding pipe to a hot air feeding pipe incorporating a ceramic heater to heat the gas by the ceramic heater to produce hot air. Then, the hot air is sent a hot air releasing pipe connected to the hot air feeding pipe to introduce the hot air to a hot air introducing pipe connected to the hot air releasing pipe. The hot air is injected from a roller provided to the nozzle to the welding material over its tip end to rear end in a longitudinal direction to heat, press, soften and bake the welding material. Then, after returning the roller to the tip end of the first welding material, a second welding material is fed on the first welding material so that parts of the first and second welding materials overlap each other in a width direction. Next, the hot air is injected over the overlapped portions of the first and second welding materials to melt them while the roller provided to the nozzle applies pressure to the overlapped portions from the tip ends to the rear ends thereof in the longitudinal direction to press and integrate the overlapped portions of the first and second welding materials each other. Finally, cooling air is fed to the overlapped portions of the first and second welding materials from a cooling pipe provided to the nozzle to cool them.

### [Citation List]

### [Patent Literature]

[Patent Literature 1] Japanese Patent No. 5523260
[Patent Literature 2] Japanese Unexamined Patent Application Publication No. 2018-535850
[Patent Literature 3] Japanese Examined Patent Application Publication No. S51-1266
[Patent Literature 4] Japanese Patent No. 5883235

### [Summary of Invention]

### [Technical Problem]

In the technique disclosed in Patent Literature 1, laser beams are applied to the filler metal to melt the filler metal. Generally, laser beams are applied to a spot of 1 mm or less, and thus a groove shape with high dimensional accuracy has to be prepared by laser processing and the groove shape has to be formed in a zipper mosaic joint that can be mated, instead of a liner shaped joint, as indicated in PLT 1. Furthermore, equipment for the laser welding is expensive. With those problems, this technique is not applicable for actual use.

The technique of Patent Literature 2 uses a seam welding as a base as described in the description. This cannot be applied to an undulated joint that is inappropriate for the seal welding equipment or to a joint with a thin curve line running in a left-right direction. With the problem of limited range of use, this technique is not applicable for actual use.

The technique of Patent Literature 3 is an extremely difficult welding method requiring melting of resin of main material, filling of another reinforced fiber, and injecting of melted resin, resulting in a problem that it is not applicable for actual use.

The technique of Patent Literature 4 uses a welding rod having the same type as a to-be-welded material, as described in paragraph [0034]. Furthermore, it is described in paragraph [0035] that in case the to-be-welded material is carbon fiber, welding can be achieved only when the temperature is increased up to 800 to 2,000°C in order to weld the fiber. The problem of this technique is that it is applicable only to automatic welding equipment for mass production and not applicable to manual welding often used in individual production, as a welding operation of a portion highly heated up to 2,000°C is difficult for a human operator.

An object of the present invention, which has been accomplished to solve the problems described above, is to provide a welding rod for fiber reinforced plastic, which ensures a welding operation of fiber reinforced plastic members together even by a human operator; which ensures welding of a joint portion having a groove of any shape; which ensures melting with a heating means such as hot air equipment that is inexpensive; and which ensures plastic products with sufficient welding strength. Another object of the present invention is to provide a welding method using the welding rod for fiber reinforced plastic.

### [Solution to Problem]

A first aspect of the present invention provides a welding rod for thermoplastic fiber reinforced plastic to be filled in a welding joint between thermoplastic fiber reinforced plastic members. The welding rod is melted together with the thermoplastic fiber reinforced plastic members by a heating means of hot air or a hot plate member. The welding rod includes fiber and a thermoplastic resin mixed together with the fiber. The mixture of the fiber and the thermoplastic resin is formed into a rod shape. The content of the fiber is from 1 weight% to 35 weight% when the mixture is 100 weight%.

A second aspect of the present invention provides a welding rod for thermoplastic fiber reinforced plastic based on the first aspect of the present invention, wherein the fiber is any one of carbon fiber, glass fiber, boron fiber, aramid fiber, polyethylene fiber, modified polyphenylene ether fiber and cellulose nanofiber.

A third aspect of the present invention provides a method to use a welding rod for thermoplastic fiber reinforced plastic for welding a thermoplastic fiber reinforced plastic member with another thermoplastic fiber reinforced member. The method includes: a step to select a welding rod for thermoplastic fiber reinforced plastic, the welding rod containing a thermoplastic resin having an anchoring effect with thermoplastic resins of the thermoplastic fiber reinforced plastic members forming base materials, the welding rod containing fiber in the content from 1 weight% to 35 weight%; and a step to weld the thermoplastic fiber reinforced members together wherein: a tip end of the welding rod for thermoplastic fiber reinforced plastic is pushed against a mating surface of a joint portion between the thermoplastic fiber reinforced members with an appropriate pressing force; a heating means composed of hot air or a heat plate member is used to melt only the thermoplastic resin contained in the welding rod for thermoplastic fiber reinforced plastic and the resins contained in the thermoplastic fiber reinforced plastic members to thereby filling the mating surface of the joint portion with the melted thermoplastic resins and un-melted fiber; and the tip end of the welding rod for thermoplastic fiber reinforced plastic is continued to move along the joint portion while the tip end is kept pushed against the mating surface of the joint portion.

### [Advantageous Effects of Invention]

The welding rod for thermoplastic fiber reinforced plastic according to the first and second aspects of the present invention ensures welding of a thermoplastic fiber reinforced plastic member with another thermoplastic fiber reinforced member using an inexpensive heating means such as hot air or a hot plate member. The welding rod ensures application of welding to any joints with a variety of groove shapes such as an undulated shape, as well as a linear, curve or uneven shape in a plan view. The welding rod further ensures application of welding not only to groove shapes with a precise dimensional accuracy provided by laser cut but also to groove shapes with a rough dimensional accuracy provided by machine processing using a NC router or general-purpose lathe. Furthermore, the welding rod allows welding using a heating means such as hot air or a hot plate, which is inexpensive equipment, and avoids use of expensive laser welding equipment. Moreover, the welding rod can provide fiber reinforced plastic products having sufficient tensile strength of the welding. Accordingly, the welding rod for thermoplastic fiber reinforce plastic according to the present invention is effective in actual use.

In addition, the inexpensive heating means composed of the hot air or a hot plate member is used to melt a thermoplastic region at the tip end of the welding rod for fiber reinforced plastic and thermoplastic regions of the fiber reinforced plastic members, which are base materials, at the joint location. This can provide a mixed portion of the base materials and the welding rod, providing a predetermined tensile strength due to an anchoring effect between the thermoplastic resins and the fiber in the mixed portion.

The welding method using the welding rod for thermoplastic fiber reinforce plastic according to the third aspect provides the same effects as the welding rod for thermoplastic fiber reinforced plastic according to the first and second aspects. Accordingly, this welding method is effective in actual use to weld thermoplastic fiber reinforce plastic members together.

The welding using the welding rod for thermoplastic fiber reinforced plastic according to the present invention is applied effectively to both the welding performed by human operators and performed by automatic welding machines.

### [Brief Description of Drawings]

[Fig. 1] Fig. 1 is a flow chart illustrating how a welding rod for thermoplastic fiber reinforced plastic of the present invention is used.
[Fig. 2] Fig. 2 is an explanatory illustration showing an example of an embodiment of the welding method.

### [Description of Embodiments]

In the JIS standard for plastic welding strength, JIS Z 3831: 2002 defines the test method and judgment criteria for the plastic welding technology certification. It only specifies three types of test specimens, which are polyvinyl chloride, polypropylene, and high-density polyethylene, having a tensile yield stress of 50 MPa or more. The JIS standard does not specify fiber reinforced plastic welding, which indicates that the fiber reinforced plastic welding is not performed in general.

In addition, products of carbon fiber reinforced plastic, for example, are first manufactured in Japan in 1972 as fishing rods for trout fishing, as golf clubs in 1973 and as aircraft parts in 1975, expanding its use for about 50 years until today. However, again, the JIS standard does not define the fiber reinforced plastic welding.

The JIS standard does not define the fiber reinforced plastic welding even today after 50 years that the carbon fiber reinforced plastic products began to spread in the market. Furthermore, welding is not used to fix carbon fiber reinforced plastic members together. Only used for them are a bonding method by means of an adhesive and a mechanical method by means of tightening members such as bolts. Therefore, it is evident that the welding rod for thermoplastic fiber reinforced plastic according to the present invention is an epoch-making invention in enabling welding of thermoplastic fiber reinforced plastic members together in practical use.

A welding rod 4 for thermoplastic fiber reinforced plastic according to the present invention is filled in a welding joint between a base material 5a composed of a thermoplastic fiber reinforced plastic member and a base material 5b composed of another thermoplastic fiber reinforced plastic member. The welding rod 4 can melt by a heating means (not illustrated in the drawings) such as hot air or a hot plate member. The welding rod 4 is a mixture of fiber and a thermoplastic resin and is formed into a stick shape. The content of the fiber is from 1 weight% to 35 weight% when the mixture is 100 weight%.

The welding rod 4 for thermoplastic fiber reinforced plastic is melted and filled in a mating face of a joint portion and is cooled when two base members 5a, 5b, each composed of a corresponding thermoplastic fiber reinforced plastic member, are fixed together by welding such as a butt welding, T-shaped fillet welding or L-shaped fillet welding. With this, the welding rod 4 fixes the thermoplastic fiber reinforced plastic members of the base materials 5a, 5b together by an anchoring effect.

The anchoring effect in the present invention implies that the thermoplastic resins, mixed with fiber, of the thermoplastic fiber reinforced plastic members of the base materials 5a, 5b and the thermoplastic resin, mixed with fiber, of the welding rod 4 for thermoplastic fiber reinforced plastic are melted by the same heating means, and are cooled and fixed almost simultaneously, whereby the fiber of the base materials 5a, 5b and the welding rod 4 for thermoplastic fiber reinforced plastic and the thermoplastic resins of the base materials 5a, 5b and the welding rod 4 for thermoplastic fiber reinforced plastic are mixed altogether, firmly connecting the base material 5a with the base material 5b.

A first pattern of the anchoring effect is that the thermoplastic resins penetrate into tiny uneven portions on the mating surface of the joint portion between the base materials 5a, 5b, thereby firmly connecting them together. A second pattern is that the thermoplastic resins penetrate into tiny uneven portions that the fiber itself has, thereby connecting the base materials 5a, 5b together firmly. A third pattern is that the fiber of the welding rod 4 for thermoplastic fiber reinforce plastic sticks to the mating surface between the base materials 5a, 5b, thereby firmly connecting the base materials 5a, 5b together.

Here, the thermoplastic fiber reinforced plastic members, which are the base materials 5a, 5b, will be described. The thermoplastic fiber reinforced plastic member is a mixture of fiber and a thermoplastic resin and is a product made of a thermoplastic fiber reinforced plastic. The thermoplastic fiber reinforced plastic member composed of a thermoplastic carbon fiber reinforced plastic, for example, has light weight, high strength and good recyclability. It is widely used as a product such as a shaft of golf clubs, tail wing of aircrafts, monocoque frame of automobiles, rotor blade of wind turbines, and assist suits.

The fiber mixed with the thermoplastic fiber reinforced plastic member is one or more than one of carbon fiber, glass fiber, boron fiber, aramid fiber, polyethylene fiber, modified polyphenylene ether fiber and cellulose nanofiber.

The carbon fiber contained in the thermoplastic carbon fiber reinforced plastic member may be PAN-based carbon fiber, which is most commonly used, and may be any one of pitch-based carbon fiber and rayon-based carbon fiber.

The thermoplastic resin to be contained in the thermoplastic fiber reinforced plastic member is polyamide, polyester, polyphenylene sulfide, polyetheretherketone, polycarbonate, polyolefin, etc., and may be any other thermoplastic resins.

The joint type to fix the thermoplastic fiber-reinforced plastic members, which are the base materials 5a and 5b, includes a butt joint, T-shaped fillet joint, L-shaped fillet joint and the like.

Next, the welding rod for thermoplastic fiber reinforced plastic will be described. The welding rod for thermoplastic fiber reinforced plastic is a mixture of fiber and a thermoplastic resin and is formed into a stick shape, wherein the content of the fiber is from 1 weight% to 35 weight% when the mixture is 100 weight%.

The fiber contained in the welding rod for thermoplastic fiber reinforced plastic is at least one or more than one of carbon fiber, glass fiber, boron fiber, aramid fiber, polyethylene fiber, modified polyphenylene ether fiber and cellulose nanofiber.

Regarding the carbon fiber, it may be one or more than one of PAN-based carbon fiber, pitch-based carbon fiber and rayon-based carbon fiber.

Regarding the types of the fiber of the base materials 5a, 5b, the type of the fiber of the welding rod 4 for thermoplastic fiber reinforced plastic is preferably identical to that of the fiber contained in the base materials 5a, 5b. However, the type of the fiber of the welding rod 4 may be unidentical to that of the fiber in the base materials 5a, 5b, as far as it is in a range of type that exhibits an anchoring effect and provides a product satisfying a requirement in quality. This is because the anchoring effect can be observed even if the fiber in the welding rod 4 is different from the fiber contained in the base materials 5a, 5b.

A welding experimental test using a thermoplastic fiber reinforced plastic members containing carbon fiber was conducted as shown below. Besides this test, it was confirmed that thermoplastic fiber reinforced plastic members containing other than carbon fiber, such as glass fiber, boron fiber, aramid fiber, polyethylene fiber, modified polyphenylene ether fiber and cellulose nanofiber can be welded by the welding rod 4 for thermoplastic fiber reinforced plastic of the present invention.

The thermoplastic resin contained in the welding rod for thermoplastic fiber reinforced plastic may be any type including polyamide, polyester, polyphenylene sulfide, polyetheretherketone, polycarbonate, polyolefin, etc. In relation to the type of the thermoplastic resin of the base materials 5a, 5b, the type of the thermoplastic resin of the welding rod 4 for thermoplastic fiber reinforced plastic to be used is preferably in combination with the same type of the thermoplastic resins of the base materials 5a, 5b, as thermoplastic resins having minor melting points melt almost simultaneously by heat. However, the type of the thermoplastic resin of the welding rod 4 for thermoplastic fiber reinforced plastic to be used may be in combination with a different type of the thermoplastic resin of the base materials 5a, 5b, as far as it provides an anchoring effect.

In case the type of the thermoplastic resins of the thermoplastic fiber reinforced plastic members of the base materials 5a, 5b is the same type as that of the thermoplastic resin contained in the welding rod 4 for thermoplastic fiber reinforced plastic, the thermoplastic resins contained in the base materials 5a, 5b is polyamide and the thermoplastic resin contained in the welding rod 4 for thermoplastic fiber reinforced plastic is also polyamide, for example. In case the former differs from the latter, the thermoplastic resins contained in the base materials 5a, 5b are polyvinyl chloride (with a melting point from 85°C to 210°C) and the thermoplastic resin contained in the welding rod 4 for thermoplastic fiber reinforced plastic is acrylic resin (with a melting point of 160°C).

The mixing ratio between the fiber and the thermoplastic resin in the welding rod 4 for thermoplastic fiber reinforced plastic is not related to the mixing ratio between the fiber and the thermoplastic resin of each of the base members 5a, 5b. The mixing ratio is determined so as to satisfy the tensile strength of the welding quality.

Next, the heating means will be described. The heating means to melt the welding rod 4 for thermoplastic fiber reinforced plastic and the thermoplastic fiber reinforced plastic members forming the base materials 5a, 5b is composed of hot air or a hot plate member. The heating means uses hot air or a hot plate member to melt the welding rod for plastic welding, without use of laser beam irradiations that require expensive equipment. This allows an application of an existing heating means without change.

Next, the tensile strength according to an experimental test using a welding rod 4 for thermoplastic fiber reinforced plastic of the present invention will be described. A welding rod 4 (with a diameter of 3 mm) for thermoplastic carbon fiber reinforced plastic was used, as a representative example, as the welding rod 4 for thermoplastic fiber reinforced plastic of the present invention to conduct a tensile test. Two test pieces, each having a width of 20 mm, length of 30 mm and thickness of 2 mm, were abutted to each other and welded together, and then the welded piece was pulled with a tensile speed of 50 mm/minute for the tensile test. The tensile test result is shown in Table 1. The average value in Table 1 indicates an average value of three experiments conducted. In Table 1, the test pieces used (corresponding to the base members 5) are thermoplastic carbon fiber reinforced plastic members each containing carbon fiber. The content of the carbon fiber in each of the thermoplastic carbon fiber reinforced plastic members is 40 weight% when the thermoplastic carbon fiber reinforced plastic members each is 100 weight%. The content of the carbon fiber in Table 1 is the content in the welding rod 4 for thermoplastic carbon fiber reinforced plastic.

**[Table 1]**

| The content of carbon fiber in the welding rod (weight%) | | Tensile strength (MPa) (Average) | |
|---|---|---|---|
| | 0 | The welding rod melted before the base material did | |
| | 10 | | 49.8 |
| | 20 | | 42.3 |
| | 30 | | 33.1 |
| | 40 | | Extremely small |

According to Table 1, in welding together two thermoplastic carbon fiber reinforced plastic members each containing 40 weight% of carbon fiber, the welding rod 4 for thermoplastic carbon fiber reinforced plastic containing 0 weight% of carbon fiber melted before the thermoplastic resin of the base material did, resulting in a phenomenon in which they are not mixed together in a melting state. The welding rod 4 for thermoplastic carbon fiber reinforced plastic containing 10 weight% of carbon fiber resulted in the maximum tensile strength of 49.8 MPa. The welding rod 4 for thermoplastic carbon fiber reinforced plastic containing 20 weight% of carbon fiber resulted in the tensile strength of 42.3 MPa that is slightly below the previous one (about 15% reduced with respect to the one having 10 weight% of carbon fiber). The welding rod 4 for thermoplastic carbon fiber reinforced plastic containing 30 weight% of carbon fiber resulted in the tensile strength of 33.1 MPa that is further below the former one (about 33% reduced with respect to the one having 10 weight% of carbon fiber). The welding rod 4 for thermoplastic carbon fiber reinforced plastic containing 40 weight% of carbon fiber, which is the same as that of the base material, resulted in the further reduced and much smaller tensile strength.

In the welding generally conducted between plastic members not containing fiber, a welding rod is pushed at a tip end thereof to a mating surface of a joint portion so that the welding rod and the base materials are melted and filled in the mating surface of the joint portion. On the other hand, in the welding between the thermoplastic fiber reinforced plastic members, the welding rod for thermoplastic carbon fiber reinforced plastic containing 0 weight% of carbon fiber resulted in the great difference in the melting temperature due to only the presence of the carbon fiber. Thus, the welding rod for thermoplastic plastic was melted much faster than the base materials, resulting in the welding with extreme difficulty.

Meanwhile, in the plastic welding generally conducted, welding rods composed of the same components as the base materials are used. To follow the theory of the above general case where a welding rod composed of the same components as the base materials should be used, a welding rod 4 for thermoplastic carbon fiber reinforced plastic containing 40 weight% of carbon fiber should be used for welding thermoplastic fiber reinforced plastic members forming the base materials each containing 40 weight % of carbon fiber, for example. The welding rod having the above requirement was used for the welding and the tensile strength was measured. As the welding rod contains a small amount of thermoplastic resin as a large amount of carbon fiber is contained, an anchoring effect was observed in only an extremely small area, whereby a welding portion was separated from the base materials with a very small tensile force.

Based on the experimental test, the lower limit of the content of carbon fiber in the welding rod 4 for thermoplastic carbon fiber reinforced plastic was determined to be 1 weight% or greater for the following reasons. According to the test, the welding rod containing 10 weight% of carbon fiber exhibited the maximum tensile strength among those containing 0 weight%, 10 weight%, 20 weight% and 30 weight% of carbon fiber. In addition, a welding rod 4 for thermoplastic carbon fiber reinforced plastic containing only 1 weight% of carbon fiber is given an increased melting point to thereby make the difference in the melting temperatures smaller between the welding rod 4 and base materials 5.

The upper limit of the content of carbon fiber in the welding rod 4 for thermoplastic carbon fiber reinforced plastic was determined to be 35 weight% based on the experimental test. According to the test, among welding rods 4 containing 10 weight%, 20 weight%, 30 weight% and 40 weight% of carbon fiber, respectively, a welding rod 4 containing a greater amount of carbon fiber exhibited a reduced tensile strength. In addition, the welding rod containing 30 weight% of carbon fiber exhibited a tensile strength approximately 33% lower than the welding rod containing 10 weight% of carbon fiber. Furthermore, the welding rod containing 40 weight% of carbon fiber exhibited an extremely small tensile strength.

The conventional plastic welding has been commonly and generally performed in such a manner that the type of thermoplastic resins of base materials used are identical to the type of thermoplastic resin of a welding rod. Unlike the above conventional technique, the type of thermoplastic resin of the welding rod for thermoplastic fiber reinforced plastic according to the present invention may be unidentical to the type of thermoplastic resins of thermoplastic fiber reinforced plastic members, as far as it provides a combination that exhibits an anchoring effect.

Applying the performance of the conventional normal plastic welding, in which the type of thermoplastic resins of base materials are commonly and generally identical to the type of thermoplastic resin of a welding rod, to the present invention, the welding rod containing fiber in the same ratio as the base materials should be used. In the present invention, however, as determined by the experimental test indicated in Table 1, the welding rod containing 40 weight% of fiber failed to perform welding. Accordingly, the content of fiber contained in a welding rod for thermoplastic fiber reinforced plastic of the present invention was determined independent from the content of fiber contained in the thermoplastic fiber reinforced plastic member.

The present invention provides an anchoring effect for fixation through melting of the part of thermoplastic resins only and not through melting fiber, so that any type of fiber can be employed. The content of the fiber contained in the welding rod 4 for thermoplastic fiber reinforced plastic member is determined to be from 1 weight% to 35 weight% and preferably from 3 weight % to 30 weight% when the welding rod 4 for thermoplastic fiber reinforced plastic is 100 weight%.

The tensile strength as the welding strength shown in Table 1 indicates 33.1 to 49.8 MPa. This shows that the welding rod according to the present invention provides further improved tensile strength in comparison with JIS Z 3831: 2002 pass/fail judgment criteria for tensile tests of welded parts of plastic welding. The criteria defines that the tensile strength of polyvinyl chloride plate should be 30 MPa or greater, that of polypropylene plate should be 15 MPa or greater, and that of polyethylene plate should be 12 MPa or greater, all at a tensile speed of 50mm/min. Used in the criteria are a welding rod with a diameter of 3 mm and test pieces each having a width of 20 mm, a length of 60 mm and a thickness of 5 mm, the test pieces being abutted and welded to each other.

As a comparison of tensile strength, Table 2 shows a test result of tensile shear force of adhesive bonding method using an adhesive, which is generally used to fix a fiber reinforced plastic member with another fiber reinforced plastic member. Each of the pieces used in the test was a thermoplastic carbon fiber reinforced plastic member having a width of 20 mm, a length of 60 mm and a thickness of 1 mm. The pieces were jointed together with a joint area of 400 mm² and the test was conducted at a tensile speed of 0.5 mm/min using a tabletop universal testing machine.

**[Table 2]**

| Adhesive | Tensile shear force (MPa) | |
|---|---|---|
| Epoxy resin | | 3.48 |
| Acrylic resin | | 3.95 |

The tensile strength and the tensile shear force shown in Table 2 are different forces and thus a simple comparison cannot be applied to them. However, it is determined that the welding using the welding rod for thermoplastic carbon fiber reinforced plastic according to the present invention exhibits sufficient tensile strength based on the comparison between the bonding area and the welding area.

The welding rod 4 for thermoplastic fiber reinforced plastic is used to fix between thermoplastic fiber reinforced plastic members together in such a manner that the thermoplastic resin of the welding rod and the thermoplastic resins of the members are heated to their melting points and melted, whereby the fibers, which are not melted, and the melted thermoplastic resins altogether perform an anchoring effect to fix the members together. This indicates that the welding can be performed among any types of fiber.

The welding rod for thermoplastic fiber reinforced plastic according to the present invention can weld between thermoplastic fiber reinforced members each containing thermoplastic carbon fiber reinforced plastic, thermoplastic glass fiber reinforced plastic, thermoplastic boron fiber reinforced plastic, thermoplastic aramid fiber reinforced plastic, thermoplastic polyethylene fiber reinforced plastic, thermoplastic modified polyphenylene ether fiber reinforced plastic, or thermoplastic cellulose nanofiber reinforced plastic. Furthermore, the welding rod can weld between thermoplastic fiber reinforced members each containing fiber selected from at least one or more of carbon fiber, glass fiber, boron fiber, aramid fiber, polyethylene fiber, modified polyphenylene ether fiber, or cellulose nanofiber.

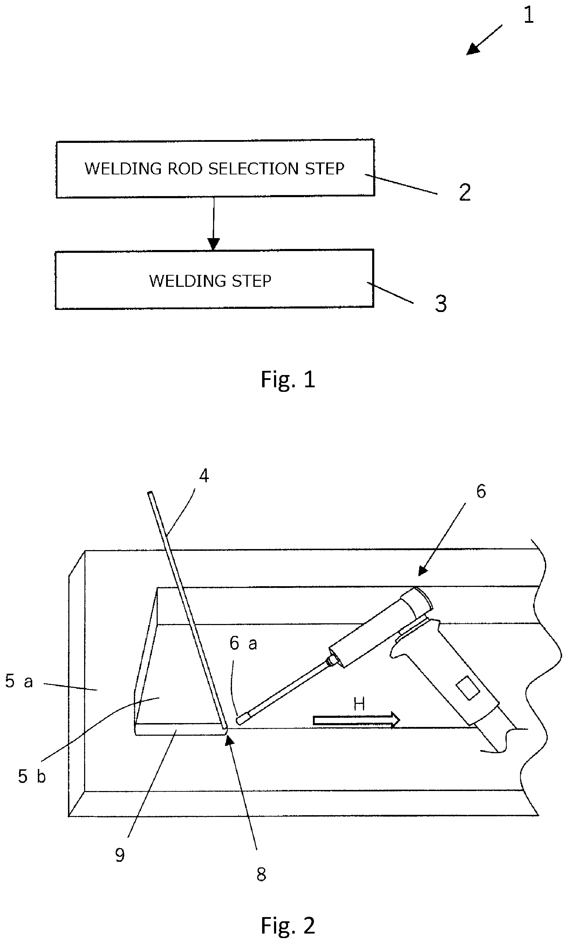

As illustrated in Fig. 1 and Fig. 2, a welding method 1 using a thermoplastic fiber reinforced plastic according to the present invention is a method 1 for welding a thermoplastic fiber reinforced plastic member with another thermoplastic fiber reinforced member. The method includes: a step 2 to select a welding rod 4 for thermoplastic fiber reinforced plastic, the welding rod 4 containing a thermoplastic resin having an anchoring effect with a thermoplastic resins of the thermoplastic fiber reinforced plastic members forming base materials 5a, 5b, the welding rod 4 containing fiber in the content from 1 weight% to 35 weight%; and a step 3 to weld the thermoplastic fiber reinforced members together wherein: a tip end of the welding rod 4 for thermoplastic fiber reinforced plastic is pushed against a mating surface of a joint portion between the thermoplastic fiber reinforced members with an appropriate pressing force; a heating means composed of hot air or a heat plate member is used to melt only the thermoplastic resin contained in the welding rod 4 for thermoplastic fiber reinforced plastic and the resins contained in the thermoplastic fiber reinforced plastic members to thereby filling the mating surface of the joint portion with the melted thermoplastic resins and un-melted fiber; and the tip end of the welding rod 4 for thermoplastic fiber reinforced plastic is continued to move along the joint portion while the tip end is kept pushed against the mating surface of the joint portion.

In the step 2 to select a welding rod, a welding rod 4 for thermoplastic fiber reinforced plastic is selected. The welding rod 4 contains a type of thermoplastic resin producing an anchoring effect with a type of thermoplastic resins of thermoplastic fiber reinforced plastic members forming base materials 5a, 5b. The welding rod 4 also contains any type of fiber with the content from 1 weight% to 35 weight%.

The welding rod 4 for thermoplastic fiber reinforced plastic is a mixture of fiber and a thermoplastic resin, which is formed into a stick shape, melts by a heating means such as hot air or a hot plate member and is filled in a welding joint between thermoplastic fiber reinforced plastic members forming base materials 5a, 5b. The content of the fiber is 1 weight% or greater and 35 weight% or less.

The fiber is one of or at least one or more of carbon fiber, glass fiber, boron fiber, aramid fiber, polyethylene fiber, modified polyphenylene ether fiber and cellulose nanofiber. Although the type of the fiber contained in the welding rod 4 for thermoplastic fiber reinforced plastic is preferably identical to that contained in the base materials 5a, 5b, any other fiber satisfying product quality standards including strength may be employed.

Either one of the hot air and the hot plate member may be used as the heating means as far as it can heat and melt the thermoplastic resins.

The type of the thermoplastic resin contained in the welding rod 4 for thermoplastic fiber reinforced plastic may be combined with an identical or unidentical type of that contained in the base materials, as long as it exhibits an anchoring effect.

As illustrated in Fig. 2, in the welding step 3, a tip end of the welding rod 4 for thermoplastic fiber reinforced plastic is pushed with an appropriate force against a mating surface of a joint portion between thermoplastic fiber reinforced plastic members forming the base materials 5a, 5b. Then, a heating means composed of hot air or a hot plate member is used to melt the thermoplastic resin of the welding rod 4 and the thermoplastic resins of the base materials 5a, 5b with a melting temperature, thereby forming a melted portion 8. Furthermore, the welding rod 4 is moved in the direction of arrow H along the joint portion while melted thermoplastic resins and un-melted fiber are filled in the mating surface of the joint portion. A clear bead 9 is formed on the trace of the movement.

As described above, the tip end of the welding rod 4 for thermoplastic fiber reinforced plastic is pushed with an appropriate force against the mating surface of the joint portion between thermoplastic fiber reinforced plastic members forming the base materials 5a, 5b. If the tip end of the welding rod 4 does not contact the mating surface of the joint portion during the welding, the mating surface of the joint portion is not filled with the thermoplastic resins and fiber, which may result in quality defects such as pinholes. The appropriate force of the pushing may be a force with which the tip end of the welding rod 4 for thermoplastic fiber reinforced plastic can be continuously pushed against the mating surface of the joint portion during the movement of the welding rod 4.

For example, a welding gun 6 is used to blow hot air from its tip end portion 6a to melt, with a melting temperature, a part of the thermoplastic resin located at a tip end portion of the welding rod 4 for thermoplastic fiber reinforced plastic and parts of thermoplastic resins of the thermoplastic fiber reinforced plastic members forming the base materials located at the mating surface of the joint portion to thereby filling melted thermoplastic resins and un-melted fiber in the mating surface of the joint portion. The melted thermoplastic resin of the thermoplastic fiber reinforced plastic and the melted thermoplastic resins of the thermoplastic fiber reinforced plastic members forming the base materials 5a, 5b together provide an anchoring effect, ensuring a tensile strength that is a welding strength.

The welding method 1 for welding thermoplastic fiber reinforced plastic members according to the present invention, in which the welding rod for thermoplastic fiber reinforced plastic is used, is performed with a heating temperature identical to the heating temperature used in the conventional welding for plastic members not containing fiber, which enables a welding operation by human operators with existing welding equipment. In addition, this welding method does not require a mating-type fastener shaped mosaic joint between thermoplastic fiber reinforced plastic members and allows employment of a substantially straight simple shaped joint, as illustrated in Fig. 2.

### [Reference Signs List]

- 1: welding method
- 2: welding rod selecting step
- 3: welding step
- 4: welding rod
- 5: base material
- 6: welding gun
- 6a: tip end
- 8: melted portion
- 9: bead
- H: direction

## Claims

1. A welding rod for thermoplastic fiber reinforced plastic to be filled in a welding joint between thermoplastic fiber reinforced plastic members, the welding rod being melted together with the thermoplastic fiber reinforced plastic members by a heating means of hot air or a hot plate member, the welding rod comprising:
fiber; and
a thermoplastic resin being mixed together with the fiber, the mixture of the fiber and the thermoplastic resin forming a rod shape, wherein
the content of the fiber is from 1 weight% to 35 weight% when the mixture is 100 weight%.

2. The welding rod for thermoplastic fiber reinforced plastic of claim 1, wherein the fiber is any one of carbon fiber, glass fiber, boron fiber, aramid fiber, polyethylene fiber, modified polyphenylene ether fiber and cellulose nanofiber.

3. A method for welding a thermoplastic fiber reinforced plastic member with another thermoplastic fiber reinforced member, the method comprising:
a step to select a welding rod for thermoplastic fiber reinforced plastic, the welding rod containing a thermoplastic resin having an anchoring effect with a thermoplastic resin of the thermoplastic fiber reinforced plastic members forming base materials, the welding rod containing fiber in the content from 1 weight% to 35 weight%; and
a step to weld the thermoplastic fiber reinforced members together wherein: a tip end of the welding rod for thermoplastic fiber reinforced plastic is pushed against a mating surface of a joint portion between the thermoplastic fiber reinforced members with an appropriate pressing force; a heating means composed of hot air or a heat plate member is used to melt only the thermoplastic resin contained in the welding rod for thermoplastic fiber reinforced plastic and the resins contained in the thermoplastic fiber reinforced plastic members to thereby filling the mating surface of the joint portion with the melted thermoplastic resins and un-melted fiber; and the tip end of the welding rod for thermoplastic fiber reinforced plastic is continued to move along the joint portion while the tip end is kept pushed against the mating surface of the joint portion.
